# EUROPÄISCHE PATENTSCHRIFT

(11) **EP 1 970 262 B1**
(45) Veröffentlichungstag und Bekanntmachung des Hinweises auf die Patenterteilung: **08.08.2012**
(21) Anmeldenummer: 08100918.5
(22) Anmeldetag: 25.01.2008
(51) Int. Cl.: B60R 21/0132

(54) **Steuergerät und Verfahren zur Ansteuerung von Personenschutzmitteln**
Control device and method for controlling personal protection means
Appareil de commande et procédé de commande de moyens de protection des personnes

(30) Priorität: 15.03.2007 DE 102007012463
(43) Veröffentlichungstag der Anmeldung: 17.09.2008
(73) Patentinhaber: ROBERT BOSCH GMBH, 70442 Stuttgart (DE)
(72) Erfinder: Henne, Ralf, 74343 Sachsenheim (DE); Meier, Klaus-Dieter, 71229 Leonberg (DE); Hartmann, Roger, 71254 Ditzingen (DE)

(56) Entgegenhaltungen:
- EP-A1- 1 844 988
- DE-A1-102004 020 681

## Beschreibung

### Stand der Technik

Die Erfindung betrifft ein Steuergerät bzw. ein Verfahren zur Ansteuerung von Personenschutzmitteln nach der Gattung der unabhängigen Patentansprüche.

Aus DE 10 2004 020 681 A1 ist es bekannt, dass Sensorsignale von einem Prozessor und parallel von einem Sicherheitscontroller ausgewertet werden und das nur, wenn beide, sowohl der Prozessor als auch der Sicherheitscontroller einen ansteuerrelevanten Unfall anzeigen, die Personenschutzmittel angesteuert werden. Damit ist durch den Prozessor und den Sicherheitscontroller die Bedingung der unabhängigen Hardwarepfade bei der Auswertung der Sensorsignale erfüllt.

Aus der EP 1 844 988 A1 ist ein Steuergerät gemäß dem Oberbegriff des Anspruchs 1 bekannt.

### Offenbarung der Erfindung

Das erfindungsgemäße Steuergerät bzw. das erfindungsgemäße Verfahren zur Ansteuerung von Personenschutzmitteln mit den Merkmalen der unabhängigen Patentansprüche haben demgegenüber den Vorteil, dass nunmehr auch Signale von einem außerhalb des Steuergeräts befindlichen Bus durch den Sicherheitscontroller ausgewertet werden können. Dafür ist erfindungsgemäß ein Baustein vorgesehen, der die Bussignale umformatiert, und zwar in ein geeignetes Format für den Sicherheitscontroller und diese umformatierten Signale dann dem Sicherheitscontroller bereitstellt. Damit können solche Sensorsignale, die über einen externen Bus in das Steuergerät gelangen, durch die beiden unabhängigen Hardwarepfade hinsichtlich der Auswertung der Sensorsignale, nämlich Prozessor und Sicherheitscontroller, in einfacher und zuverlässiger Art und Weise ausgewertet werden.

Hardwarepfade hinsichtlich der Auswertung der Sensorsignale, nämlich Prozessor und Sicherheitscontroller, in einfacher und zuverlässiger Art und Weise ausgewertet werden.

Damit ist eine erhöhte Flexibilität bezüglich der Auswertung von Signalen, die über einen Bus übertragen werden, gegeben. Der Funktionsumfang des Sicherheitscontrollers ist damit erheblich erweitert worden. Insbesondere ist ein Sicherheitscontroller hinsichtlich seiner Komplexität weniger aufwändig, als ein eigenständiger Prozessor. Damit kann also durch einfache Mittel die Auswertung solcher in Bussignalen enthaltenen Sensorsignalen erreicht werden.

Der Prozessor und der Sicherheitscontroller stellen die üblicherweise geforderten unabhängigen Hardwarepfade zur Auswertung des Sensorsignals dar, um eine erhöhte Sicherheit hinsichtlich der Ansteuerung von Personenschutzmitteln zu erreichen. Diese Konfiguration kann erfindungsgemäß übernommen werden und wird durch die Umwandlung der Bussignale vorteilhafter Weise erweitert.

Bei den Personenschutzmitteln handelt es sich um Airbags, Gurtstraffer, crashaktive Kopfstützen, einsetzbare Sitzkomponenten wie Seitenwangen, Überrollbügel und auch äußere Personenschutzmittel wie Fußgängerschutzmittel. Es sind jedoch auch aktive Personenschutzmittel, wie Bremsen oder eine Fahrdynamikregelung denkbar.

Unter dem Begriff "Ansteuern" ist die Aktivierung dieser Personenschutzmittel gemeint. D. h. beispielsweise bei pyrotechnischen Personenschutzmitteln wie Airbags, dass die Zündladung durch Bestromung zum Zünden gebracht wird. Bei elektromagnetischen Personenschutzmitteln wird durch einen Aktivierungsstrom die elektromagnetische Vorrichtung aktiviert.

Der Prozessor ist vorliegend üblicherweise ein Mikrocontroller, es sind jedoch auch andere Prozessortypen möglich. Es ist nicht notwendiger Weise so, dass der Prozessor eine eigene Hardware aufweist, er kann sich die Hardware auch mit anderen Komponenten teilen. Es ist möglich, einen integrierten Schaltkreis vorzusehen, der beispielsweise mehrere Bereiche hat, die unabhängig voneinander funktionieren, wobei dann einer dieser Bereiche der erfindungsgemäße Prozessor ist.

Unter dem Sensorsignal ist eine Ein- oder Mehrzahl von Sensorsignalen zu verstehen, wobei dieses Sensorsignal auch Signale von unterschiedlichen Sensoren, wie Beschleunigungssensoren, Luftdrucksensoren, Körperschallsensoren, Umfeldsensoren oder auch von anderen Steuergeräten, wie einer Fahrdynamikregelung, sein kann. Auch von diesem Sensorsignal abgeleitete Signale sind möglich, so dass beispielsweise ein gefiltertes Beschleunigungssignal oder ein integriertes Beschleunigungssignal darunter fallen. Vorliegend sind insbesondere von der Drehrate abhängige Signale gemeint und so auch die Drehrate selbst.

Unter dem Sicherheitscontroller ist üblicherweise ein integrierter Schaltkreis zu verstehen, der nicht dem Prozessor entspricht, d. h. es kann zwar ein integrierter Schaltkreis vorliegen, der sowohl den Prozessor, als auch den Sicherheitscontroller umfasst, aber diese beiden Funktionen sind dann in getrennten Bereichen mithin in getrennter Hardware vorhanden. Üblicherweise liegen jedoch physikalisch getrennte integrierte Schaltkreise vor. Der Sicherheitscontroller ist dabei ein in seiner Komplexität erheblich einfacherer Schaltkreis, als der Prozessor. Beispielsweise vermag der Prozessor komplexe Softwareprogramme ablaufen zu lassen, während der Sicherheitscontroller üblicherweise die Signale nur mit festen Schwellen vergleicht. Der Sicherheitscontroller erfüllt üblicherweise die Aufgabe, dass er Zündkreisschaltungen freigibt, so dass das Ansteuersignal vom Prozessor dann zur Ansteuerung der Personenschutzmittel führt.

Der erfindungsgemäße Baustein ist ein eigener Schaltkreis, der getrennt vom Schaltkreis des Prozessors ist. D. h. auch hier könnte sich der Prozessor und der Baustein auf einem gleichen integrierten Schaltkreis befinden, aber die Schaltkreise auf diesem integrierten Baustein sind getrennt. Üblicherweise ist jedoch dieser Baustein auch ein physikalisch getrennter integrierter Schaltkreis. Für die Umformatierung des Bussignals weist der Baustein dann entsprechende Rechenmittel auf, so dass der Baustein prozessorartige Fähigkeiten bezüglich dieser Umformatierung aufweist. Außerdem weist der Baustein mehrere Interfaces auf, um das Bussignal aufzunehmen und entsprechend wieder abzugeben. Diese Interfaces können jedoch auch nur softwaremäßig vorhanden sein. Die Abgabe kann insbesondere an den Prozessor (Masterprozessor) erfolgen, der dann die umgewandelten Daten, beispielsweise über ein steuergeräteinternes Bussystem an den Sicherheitscontroller weitergibt.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens zur Ansteuerung von Personenschutzmitteln möglich.

Besonders vorteilhaft ist, dass der erfindungsgemäße Baustein als ein Slave-Prozessor ausgebildet ist. Dabei stellt der Baustein dann einen Prozessor dar, der jedoch erheblich einfacher ausgebildet ist, als der Prozessor, der letztlich als Masterprozessor wirkt. Die Aufgabe, die der Slave-Prozessor demnach übernimmt ist die Umformatierung des Bussignals für den Sicherheitscontroller. So werden zum Beispiel aus einem, vom Bus-Baustein kommenden Datenpaket die ansteuerrelevanten Sensor-Daten herausgefiltert und in ein entsprechendes, vom Sicherheitscontroller interpretierbares Datenwort umgewandelt. Dieses Datenwort ist dann mit einem Format beaufschlagt, das dem von einem Standard-Sensor, beispielsweise im Steuergerät entspricht. Es ist erfindungsgemäß möglich, das gewandelte Datenwort mittels eines üblicherweise verwendeten Sensor-Lese-Befehls an den Sicherheitscontroller zu übermitteln.

Vorteilhafter Weise wandelt der Baustein das wenigstens eine Bussignal in ein sogenanntes SPI-(Serial Peripherial Interface) Signal um. Üblicherweise wandelt der Baustein (Kommunikationscontroller) die auf dem Bus anliegenden, nach einem Busstandard geordneten Daten in einen für die Bus-Station relevanten Datenfluss um. Die Übermittlung dieser Daten an den Masterprozessor mittels SPI wird unter der Kontrolle dieses Masterprozessors durchgeführt.

Das Bussignal ist vorteilhafter Weise ein Flexray-Signal, wobei mit Flexray ein Fahrzeugbusstandard beschrieben wird. Flexray ist ein serielles, deterministisches und fehlertolerantes Bussystem für den Einsatz im Automobil, wobei Flexray die erhöhten Anforderungen zukünftiger Vernetzungen im Fahrzeug erfüllen soll, insbesondere eine höhere Datenübertragungsrate, Echtzeitfähigkeit und Ausfallsicherheit. Flexray zeichnet sich durch ein festgelegtes TDMA-Schema aus. Zusätzlich zum TDMA-Schema bietet das von im sogenannten Byteflight übernommene Minislotting-Protokoll einen kollisionsfreien, priorisierten, dynamischen Kommunikationskanal.

Das Sensorsignal ist, wie oben angegeben, ein von einer Drehrate abhängiges Signal. Dabei kann dies die Drehrate selbst bezeichnen, aber auch den Drehwinkel oder die Drehbeschleunigung. Auch andere mathematischen Derivate der Drehrate sind möglich.

Es ist weiterhin vorteilhaft, dass das wenigstens eine Bussignal das CAN-Signal ist. Der CAN-Standard ist ein Bussystem, das in Fahrzeugen bereits in großem Umfang Verwendung gefunden hat. Der CAN-Bus zeichnet sich durch einen Multimaster-Bus aus. Es ist daher besonders einfach, auf die vorhandenen CAN-Busstrukturen zurückzugreifen, um solche Signale übertragen zu können.

Weiterhin ist es von Vorteil, dass der Baustein das Bussignal vom Prozessor erhält. Dies kann dann relevant sein, wenn beispielsweise die Signale alle vom Prozessor zunächst eingelesen werden, so dass es dann vorteilhaft ist, vom Prozessor selbst dieses Bussignal zum Baustein bzw. dem Slave-Prozessor zu übergeben. Diese Übergabe kann beispielsweise über den SPI-Bus erfolgen.

Als zusätzliches Merkmal kann der Baustein, als auch der Sicherheitscontroller ein Sitzbelegungssignal auswerten und der Baustein überträgt dann dem Sicherheitscontroller sein Auswerteergebnis. Dadurch ist bezüglich des Sitzbelegungssignals eine verbesserte Sicherheit erreicht worden. Dieses Sitzbelegungssignal kann beispielsweise über den sogenannten LIN-Bus übertragen werden. Als Sitzbelegungssignal kommen Signale von Sitzmatten, Kraftmessbolzen oder auch Innenraumkameras in Frage.

Ausführungsbeispiele der Erfindung sind in der Zeichnung dargestellt und werden in der nachfolgenden Beschreibung näher erläutert.

Es zeigen:
- Figur 1: ein erstes Blockschaltbild des erfindungsgemäßen Steuergerät,
- Figur 2: ein zweites Blockschaltbild des erfindungsgemäßen Steuergeräts,
- Figur 3: ein erstes Flussdiagramm des erfindungsgemäßen Verfahrens und
- Figur 4: ein zweites Flussdiagramm des erfindungsgemäßen Verfahrens.

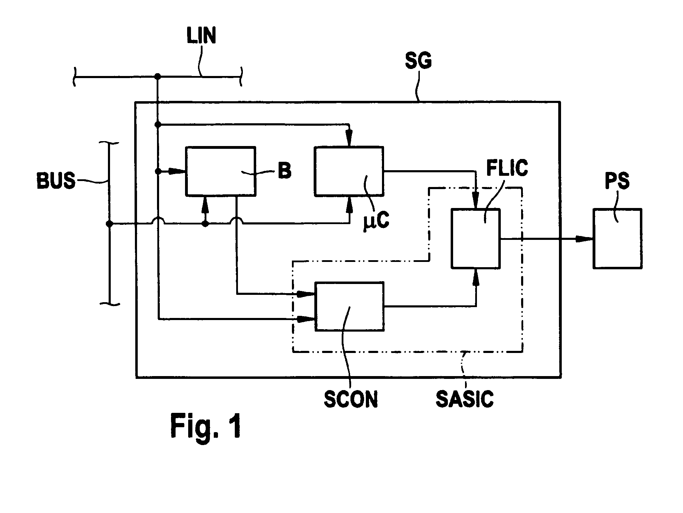

Figur 1 zeigt als Blockschaltbild das erfindungsgemäße Steuergerät SG. An das erfindungsgemäße Steuergerät SG sind hier beispielhaft zwei Busse, Bus und LIN exemplarisch angeschlossen. Der Bus ist hier beispielsweise ein Flexray-Bus. Die Signale vom Bus werden an einen Baustein B und einen Mikrocontroller µC übertragen. Dabei kann ein Tranceiver im Steuergerät SG vorgesehen sein, der diese Übertragung unterstützt. Dieser ist der Einfachheit halber, wie auch andere Komponenten, die zum Betrieb des Steuergeräts SG notwendig sind, aber für das Verständnis der Erfindung nicht der Einfachheit halber weggelassen worden.

Vom Bus werden nun Drehratensignale im Flexray-Format zum Baustein B und den Mikrocontroller µC übertragen. Vorliegend ist der Mikrocontroller µC der Prozessor. Der Mikrocontroller µC wertet das Drehratensignal mittels eines Auslösealgorithmus aus und entscheidet, ob Personenschutzmittel angesteuert werden sollen oder nicht. Der Baustein B formatiert das Bussignal um in ein für den Sicherheitscontroller SCON lesbares Format. Dieses umformatierte Bussignal, nämlich die Drehrate, wird dann an den Sicherheitscontroller SCON übertragen. Damit kann dann auch der Sicherheitscontroller SCON die Drehrate auswerten. Dafür verwendet der Sicherheitscontroller SCON weit einfachere Strukturen, als der Mikrocontroller µC. Kommt der Sicherheitscontroller SCON zu dem Ergebnis, dass ein Ansteuerungsfall vorliegt, dann gibt er für eine gewisse Zeit die entsprechenden Zündkreise in der Zündkreisschaltung FLIC frei. Bei einem solchen Zündkreis handelt es sich im Steuergerät um elektrisch steuerbare Leistungsschalter, deren Betätigung zur Zuführung von elektrischer Energie zu den Personenschutzmitteln führt. Üblicherweise werden zwei bis drei, es können jedoch auch mehr Leistungsschalter verwendet werden, wobei nur das Schließen aller dieser Schalter zur Bestromung führt.

Wie in Figur 1 angedeutet, sind der Sicherheitscontroller SCON und die Zündkreisschaltung FLIC Komponenten eines Systemasics ASIC, der in effizienter Weise diese Funktionen miteinander vereinigt. Durch die Integration sind die Zuverlässigkeit des Steuergeräts SG erhöht. Weitere Funktionen können auf diesem Systemasic, wie beispielsweise die Bereitstellung der entsprechenden Spannungen für das Steuergerät, beispielsweise 3,3 und 5 V und auch Schnittstellen für externe Sensoren vorgesehen sein.

Vorliegend ist das Steuergerät SG zusätzlich mit einem sogenannten LIN-Bus verbunden, über den üblicherweise, da er etwas langsamer als die anderen im Fahrzeug üblichen Busarten ist, zur Übertragung der Daten vom Sitzbelegungssensor verwendet. Als Sitzbelegungssensor kann die sogenannte Bladdermatte oder auch eine Mehrzahl von Kraftmessbolzen in Fahrzeugsitzen verwendet werden, um den Sitzbelegungszustand zu erkennen. Diese Daten werden vom LIN-Bus gegebenenfalls über einen Tranceiver an den Mikrocontroller µC im Baustein B und den Sicherheitscontroller SCON übertragen. Alle diese Komponenten werten getrennt voneinander das Sitzbelegungssignal aus. Der Mikrocontroller beeinflusst damit die Auswertung des Sensorsignals, das er zur Ansteuerung der Personenschutzmittel verwendet. Der Baustein B überträgt sein Auswerteergebnis an den Sicherheitscontroller SCON, der dieses Ergebnis mit seiner eigenen Auswertung abgleicht. Damit ist auch bezüglich der Auswertung des Sitzbelegungssensors das Prinzip der unterschiedlichen Hardwarepfade gewahrt. Denn auch der Sicherheitscontroller SCON beeinflusst in Abhängigkeit von der Auswertung des Sitzbelegungssensorsignals die Freigabe der entsprechenden Zündkreise.

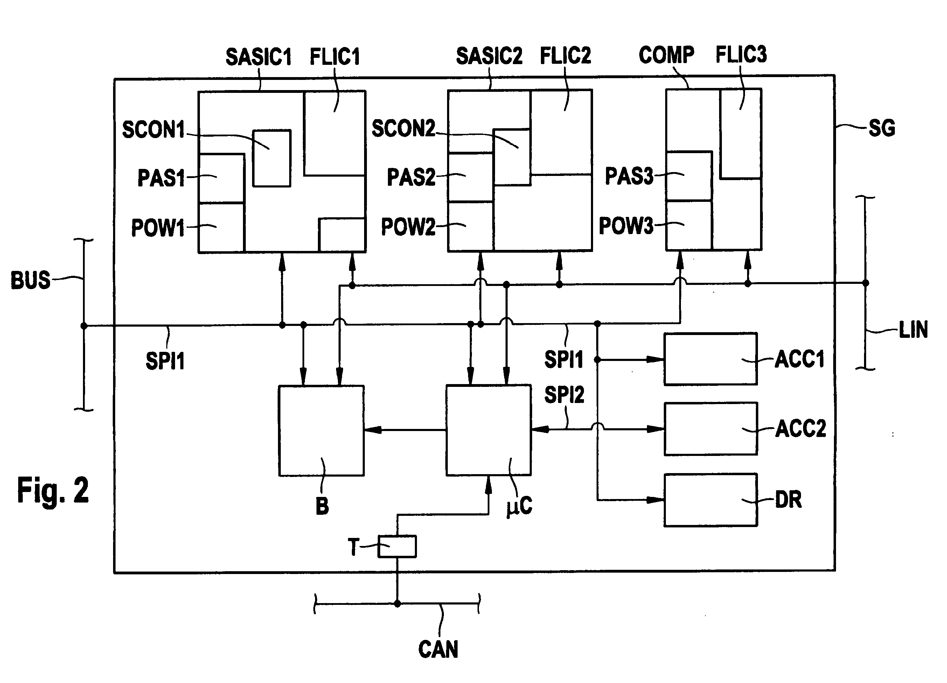

Figur 2 zeigt eine konkrete Ausformung des erfindungsgemäßen Steuergeräts. Das Steuergerät SG ist vorliegend mit drei Bussen, die extern angeschlossen sind, verbunden. Das ist zum einen der Bus, zum anderen der CAN und zum Dritten der LIN-Bus.

Die Daten vom Bus, üblicherweise der Flexray, werden über den steuergeräteinternen seriellen Bus SPI an die einzelnen Komponenten verteilt. Dazu zählen der erfindungsgemäße Baustein B, hier als Slave-Prozessor ausgebildet und der Mikrocontroller µC. Der SPI-Bus SPI ist zwar mit weiteren Komponenten verbunden, aber diese Komponenten sind nicht in der Lage, das Signal des Busses zu lesen. Der SPI-Bus ermöglicht Daten, die über ihn übertragen werden, hardwaremäßig an vorgegebene Bausteine zu übertragen, so dass andere Bausteine diesen Daten nicht annehmen. An den SPI-Bus sind nämlich weiterhin die Systemasics SASIC1 und SASIC2 angeschlossen, sowie der sogenannte Companion-Baustein COMP und der Beschleunigungssensor ACC1, sowie der Drehratensensor DR.

Der CAN-Bus ist über einen Tranceiver T an den Mikrocontroller µC angeschlossen, der beispielsweise über den SPI-Bus die Daten vom CAN-Bus an den Baustein, wie auch die Daten vom Flexray-Bus überträgt, so dass der Baustein B diese für die Systemasics SASIC1 und SASIC2 erfindungsgemäß umformatiert.

Darüber hinaus ist noch der LIN-Bus mit den Komponenten Mikrocontroller µC, Baustein B, den Systemasics SASIC1 und SASIC2 sowie den Compagnon verbunden. Über den LIN-Bus werden, wie oben angegeben, das Sitzbelegungssignal übertragen.

Bei dem Mikrocontroller µC, der hier als Master vorgesehen ist und der den Takt an den Slave-Controller B überträgt, handelt es sich beispielsweise um einen 32 Bit-RISC-Mikrocontroller mit 80 MHz Taktrate. Dabei ist beispielsweise ein Flashspeicher, sowie ein RAM und ein internes E²-PROM vorgesehen. Darüber hinaus weist der Mikrocontroller µC mehrere Schnittstellen auf, vorliegend die SPI-Schnittstelle und die SPI1-Schnittstelle, sowie die SPI2-Schnittstelle, die zum Beschleunigungssensor ACC2 führt. Auch einer LIN-Busschnittstelle und weitere Schnittstellen sind vorhanden. Auf dem Mikrocontroller µC läuft ein komplexer Auswertealgorithmus für die Sensorsignale ab, anhand dessen entschieden wird, ob die Personenschutzmittel anzusteuern sind oder nicht.

Der Slave-Prozessor B ist vorliegend beispielsweise ein Motorola MC68HC908QB mit 8 Bit, 4 MHz Takt, auch einem kleinen Flashspeicher und einem kleinen RAM-Speicher. Der Slave-Controller B führt ebenfalls eine Auswertung der LIN-Signale aus und formatiert die Flexray-Signale für den Sicherheitscontroller SCON in den Systembaustein SASIC1 und SASIC2 um. Diese Daten werden dann über die SPI1-Schnittstelle an die System-ASICs SASIC1 und SASIC2 übertragen.

Der Beschleunigungssensor ACC1 ist vorliegend in Fahrzeuglängs- und Fahrzeugquerrichtung empfindlich. Beliebige Neigungen in Achsenrichtungen sind möglich. Der Beschleunigungssensor ACC2 ist sowohl in Fahrzeugquer- als auch Fahrzeugvertikalrichtung empfindlich. Der Drehratensensor DR erfasst die Drehrate um die Fahrzeuglängsachse. Es ist auch möglich, anstatt oder zusätzlich die Drehrate um die Fahrzeugquerachse zu erfassen. Die Systemasics SASIC1 und SASIC2 weisen jeweils die bereits genannten Sicherheitscontroller SCON1 und SCON2 auf und zusätzlich einen Energieversorgungsbaustein POW1 und POW2, sowie Schnittstellen für externe Sensoren PAS1 und PAS2, sowie Zündkreisschaltungen FLIC1 und FLIC2. Nicht dargestellt ist ein Datenaustausch zwischen diesen Systemasics und auch dem sogenannten Companion COMP, der ebenfalls ein Energieversorgungsbaustein POW3 Schnittstellen für externe Sensoren PAS3 und eine Zündkreisschaltung FLIC3 aufweist. Damit sind die Zündkreisschaltungen auf drei ICs (integrierte Schaltkreise) verteilt, die der Mikrocontroller µC über die SPI1-Schnittstelle entsprechend ansteuern kann. Die Signale der externen Sensoren können empfangen über die PAS-Schnittstellen zum Mikrocontroller µC zur weiteren Auswertung übertragen werden. Die Sicherheitscontroller SCON1 und SCON2 geben jeweils in Abhängigkeit von der Auswertung der Sensorsignale die Zündkreise frei. Beim Compagnon COMP geschieht dies dann über die SPI-Schnittstelle oder andere geeignete Verbindungen.

Der Mikrocontroller µC wertet in Abhängigkeit von den Sensorsignalen, die über die Busse kommen und den internen Sensorsignalen aus, ob und welche Personenschutzmittel anzusteuern sind. Der unabhängige Hardwarepfad wird durch den Sicherheitscontroller SCON1 bzw. 2 realisiert.

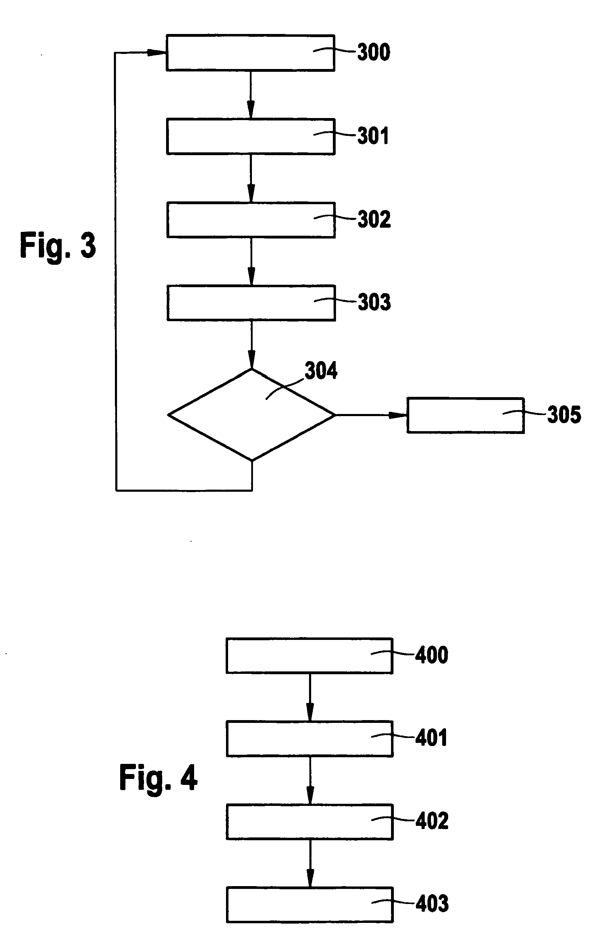

Figur 3 zeigt in einem Flussdiagramm den Ablauf des erfindungsgemäßen Verfahrens. In Verfahrensschritt 300 liest der Prozessor die Bussignale ein. Dies geschieht beispielsweise über den steuergeräteinternen SPI-Bus. Es kann jedoch auch über zusätzliche Leitungen, beispielsweise auch über Tranceiver, geschehen. Der Mikrocontroller übergibt die Bussignale dann an den Baustein B in Verfahrensschritt 301. In Verfahrensschritt 302 formatiert der Baustein B die Bussignale in ein Signal um, das für den Sicherheitscontroller SCON leicht lesbar ist. Dieses umformatierte Signal wird dann über den SPI-Bus zum Sicherheitscontroller SCON übertragen.

In Verfahrensschritt 303 werten dann der Prozessor und der Sicherheitscontroller SCON die Sensorsignale aus dem Bussignal aus und entscheiden danach, ob eine Ansteuerung erfolgen soll oder nicht. Dies wird in Verfahrensschritt 304 geprüft. Haben beide auf Ansteuerung entschieden, dann erfolgt in Verfahrensschritt 305 die Ansteuerung. Ist das jedoch nicht der Fall, dann wird zu Verfahrensschritt 300 zurückgesprungen.

Figur 4 zeigt in einem weiteren Flussdiagramm eine Variante des erfindungsgemäßen Verfahrens. In Verfahrensschritt 400 wird das Sitzbelegungssignal an den Prozessor, den Baustein B und den Sicherheitscontroller SCON übertragen. In Verfahrensschritt 404 erfolgt die getrennte Auswertung. In Verfahrensschritt 402 übergibt der Baustein B sein Auswerteergebnis an den Sicherheitscontroller SCON. In Verfahrensschritt 403 beeinflusst der Prozessor in Abhängigkeit von seiner eigenen Auswertung des Sitzbelegungssignals seine Ansteuerungsentscheidung und der Sicherheitscontroller SCON beeinflusst seine Freigabeentscheidung für die Zündkreise in Abhängigkeit von dem Sitzbelegungssignal.

Es ist möglich, dass es einen Sicherheitscontroller oder eine Mehrzahl von Sicherheitscontrollern geben kann. Auch die Verteilung der Steuergerätefunktion auf mehr als die in den Figuren dargestellten Bausteine ist möglich.

## Patentansprüche

1. Steuergerät (SG) zur Ansteuerung von Personenschutzmitteln (PS) mit einem Prozessor (µC), der in Abhängigkeit von wenigstens einem Sensorsignal die Personenschutzmittel (PS) ansteuert und wenigstens einem Sicherheitscontroller (SCON, SCON1, SCON2), der in Abhängigkeit von dem wenigstens einem Sensorsignal die Ansteuerung freigibt, wobei ein Baustein (B) vorgesehen ist, der wenigstens ein von außerhalb des Steuergeräts (SG) stammendes Bussignal, das das wenigstens eine Sensorsignal aufweist, für den wenigstens einen Sicherheitscontroller (SCON, SCON1, SCON2) umformatiert und bereitstellt, **dadurch gekennzeichnet, dass** der Baustein (B) als ein Slave-Prozessor zum Prozessor (µC) ausgebildet ist.

2. Steuergerät nach Anspruch 1, **dadurch gekennzeichnet, dass** der Baustein (B) das wenigstens eine Bussignal in ein SPI-Signal umformatiert.

3. Steuergerät nach einem der vorhergehenden Ansprüche, **dadurch gekennzeichnet, dass** das wenigstens eine Bussignal ein Flexray-Signal ist und dass das wenigstens eine Sensorsignal ein von einer Drehrate abhängiges Signal ist.

4. Steuergerät nach einem der vorhergehenden Ansprüche, **dadurch gekennzeichnet, dass** das wenigstens eine Bussignal ein CAN-Signal ist.

5. Steuergerät nach einem der vorhergehenden Ansprüche, **dadurch gekennzeichnet, dass** der Prozessor (µC) dem Baustein (B) das wenigstens eine Bussignal übergibt.

6. Steuergerät nach einem der vorhergehenden Ansprüche, **dadurch gekennzeichnet, dass** sowohl der Baustein (B) als auch der wenigstens eine Sicherheitscontroller (SCON, SCON1, SCON2) ein Sitzbelegungssignal auswerten und der Baustein (B) sein Auswerteergebnis dem wenigstens einen Sicherheitscontroller (SCON1, SCON2, SCON) übergibt.

7. Verfahren zur Ansteuerung von Personenschutzmitteln (PS), wobei die Personenschutzmittel (PS) durch einen Prozessor (µC) in Abhängigkeit von wenigstens einem Sensorsignal angesteuert werden, wobei wenigstens ein Sicherheitscontroller (SCON, SCON1, SCON2) die Ansteuerung in Abhängigkeit von dem wenigstens einen Sensorsignal freigibt, wobei ein Baustein (B) ein von außerhalb eines Steuergeräts stammenden Bussignals, das das wenigstens eine Sensorsignal aufweist, für den wenigstens einen Sicherheitscontroller (SCON, SCON1, SCON2) umformatiert und bereitstellt, **dadurch gekennzeichnet, dass** der Baustein (B) als ein Slave-Prozessor zum Prozessor (µC) ausgebildet ist.

8. Verfahren nach Anspruch 7, **dadurch gekennzeichnet, dass** das wenigstens eine Bussignal in ein SPI-Signal umformatiert wird.

9. Verfahren nach Anspruch 7 oder 8, **dadurch gekennzeichnet, dass** der Prozessor (µC) dem Baustein (B) das wenigstens eine Bussignal übergibt.

## Claims

1. Control device (SG) for controlling personal protection means (PS) having a processor (µC) which actuates the person protection means (PS) as a function of at least one sensor signal, and having at least one safety controller (SCON, SCON1, SCON2) which enables the actuation as a function of the at least one sensor signal, wherein a module (B) is provided which reformats and makes available at least one bus signal which originates from outside the control device (SG) and has the at least one sensor signal, for the at least one safety controller (SCON, SCON1, SCON2), **characterized in that** the module (B) is embodied as a slave processor to the processor (µC).

2. Control device according to Claim 1, **characterized in that** the module (B) reformats the at least one bus signal into an SPI signal.

3. Control device according to one of the preceding claims, **characterized in that** the at least one bus signal is a flexray signal, and **in that** the at least one sensor signal is a signal which is dependent on a rotational speed.

4. Control device according to one of the preceding claims, **characterized in that** the at least one bus signal is a CAN signal.

5. Control device according to one of the preceding claims, **characterized in that** the processor (µC) transfers the at least one bus signal to the module (B).

6. Control device according to one of the preceding claims, **characterized in that** both the module (B) and the at least one safety controller (SCON, SCON1, SCON2) evaluate a seat occupation signal, and the module (B) transfers its evaluation result to the at least one safety controller (SCON1, SCON2, SCON).

7. Method for actuating personal protection means (PS), wherein the personal protection means (PS) are actuated by a processor (µC) as a function of at least one sensor signal, wherein at least one safety controller (SCON, SCON1, SCON2) enables the actuation as a function of the at least one sensor signal, wherein a module (B) reformats and makes available a bus signal which originates from outside a control device and has the at least one sensor signal, for the at least one safety controller (SCON, SCON1, SCON2), **characterized in that** the module (B) is embodied as a slave processor to the processor (µC).

8. Method according to Claim 7, **characterized in that** the at least one bus signal is reformatted into an SPI signal.

9. Method according to Claim 7 or 8, **characterized in that** the processor (µC) transfers the at least one bus signal to the module (B).

## Revendications

1. Appareil de commande (SG) de moyens de protection de personnes (PS) avec un processeur (µC) qui commande les moyens de protection de personnes (PS) en fonction d'au moins un signal de capteur et d'au moins un contrôleur de sécurité (SCON, SCON1, SCON2) qui déclenche la commande en fonction d'au moins un signal de capteur, dans lequel un module (B) est prévu pour reformater et préparer au moins un signal de bus provenant de l'extérieur de l'appareil de commande (SG), comportant cet au moins un signal de capteur, pour cet au moins un contrôleur de sécurité (SCON, SCON1, SCON2),
**caractérisé en ce que** le module (B) est sous la forme d'un processeur esclave par rapport au processeur (µC).

2. Appareil de commande selon la revendication 1, **caractérisé en ce que** le module (B) reformate cet au moins un signal de bus en un signal SPI.

3. Appareil de commande selon une des revendications précédentes, **caractérisé en ce que** cet au moins un signal de bus est un signal Flexray et **en ce que** cet au moins un signal de capteur est un signal dépendant d'une vitesse de rotation.

4. Appareil de commande selon une des revendications précédentes, **caractérisé en ce que** cet au moins un signal de bus est un signal CAN.

5. Appareil de commande selon une des revendications précédentes, **caractérisé en ce que** le processeur (µC) transfère cet au moins un signal de bus au module (B).

6. Appareil de commande selon une des revendications précédentes, **caractérisé en ce que** le module (B) au même titre que cet au moins un contrôleur de sécurité (SCON, SCON1, SCON2) exploitent un signal d'occupation de siège et que le module (B) transfère son résultat d'exploitation à cet au moins un contrôleur de sécurité (SCON1, SCON2, SCON).

7. Procédé de commande de moyens de protection de personnes (PS), dans lequel les moyens de protection de personnes (PS) sont commandés par un processeur (µC) en fonction d'au moins un signal de capteur, dans lequel au moins un contrôleur de sécurité (SCON, SCON1, SCON2) déclenche la commande en fonction du au moins un signal de capteur, dans lequel un module (B) reformate et prépare un signal de bus provenant de l'extérieur d'un appareil de commande, comportant cet au moins un signal de capteur, pour cet au moins un contrôleur de sécurité (SCON, SCON1, SCON2),
**caractérisé en ce que** le module (B) est sous la forme d'un processeur esclave par rapport au processeur (µC).

8. Procédé selon la revendication 7, **caractérisé en ce que** cet au moins un signal de bus est reformaté en un signal SPI.

9. Procédé selon la revendication 7 ou 8, **caractérisé en ce que** le processeur (µC) transfère cet au moins un signal de bus au module (B).
